# DEMANDE DE BREVET EUROPEEN

(11) **EP 4 403 949 A1**
(43) Date de publication de la demande: **24.07.2024**
(21) Numéro de dépôt: 23305059.0
(22) Date de dépôt: 17.01.2023
(51) Int. Cl.: G01S 7/02

(54) **PROCÉDÉ DE DÉSENTRELACEMENT D'IMPULSIONS RADAR**

(71) Demandeur: BULL SAS, 78340 Les Clayes-Sous-Bois (FR); CentraleSupélec, 91190 Gif-sur-Yvette (FR); Centre national de la recherche scientifique, 75016 Paris (FR); Université Paris-Saclay, 91190 Gif-sur-Yvette (FR)
(72) Inventeur: MOTTIER, Manon, 75014 PARIS (FR); PASCAL, Frédéric, 94200 IVRY-SUR-SEINE (FR); CHARDON, Gilles, 91120 PALAISEAU (FR)
(74) Mandataire: IPAZ

(57) **Abrégé**

L'invention concerne un procédé (10) de désentrelacement d'impulsions radar mis en oeuvre par ordinateur et comprenant :
- mise en oeuvre (12) d'un premier algorithme de partitionnement pour affecter chaque impulsion à une première classe correspondante, sur la base d'une fréquence, d'une durée et d'un instant d'arrivée associés ;
- pour chaque première classe, estimation (14) d'une fréquence moyenne et d'une durée d'impulsion moyenne respectives ;
- mise en oeuvre (16) d'un deuxième algorithme de partitionnement pour regrouper les premières classes en deuxièmes classes sur la base de la fréquence moyenne et de la durée moyenne correspondantes ;
- pour chaque deuxième classe, détermination (18) d'une distribution des instants d'arrivée des impulsions associées ;
- mise en oeuvre (20) d'un troisième algorithme de partitionnement pour regrouper les deuxièmes classes en troisièmes classes, sur la base de distances de transport optimal entre les distributions des instants d'arrivée déterminées.

## Description

### Domaine technique

La présente invention concerne un procédé de désentrelacement d'impulsions radar, chaque impulsion radar étant associée à une fréquence, une durée et un instant d'arrivée respectifs.

L'invention concerne également un programme d'ordinateur et un dispositif configuré pour mettre en oeuvre un tel procédé.

L'invention s'applique au domaine du traitement du signal, en particulier à la discrimination entre impulsions issus d'émetteurs radar distincts.

### État de la technique

Un émetteur radar est décrit par les caractéristiques des impulsions qu'il émet : fréquence, durée d'impulsion, niveau, instant d'arrivée, direction d'arrivée, etc. Or, l'évolution des technologies a amené les sources radar à présenter des spectres électromagnétiques plus complexes et plus similaires. Par exemple, certains émetteurs radar peuvent émettre sur une fréquence unique, tandis que d'autres émettent sur plusieurs fréquences.

Ceci rend de plus en plus difficile le désentrelacement (c'est-à-dire la discrimination) des impulsions radar reçues par un récepteur en provenance d'une pluralité d'émetteurs radar distincts, en particulier en présence de bruit.

Pour surmonter ce problème, il a été proposé de recourir à des modèles d'intelligence artificielle pour effectuer un tel désentrelacement. En particulier, il a été proposé d'entraîner des modèles d'intelligence artificielle sur la base de données labelisées, associées à des émetteurs radar respectifs.

Néanmoins, un tel procédé de désentrelacement ne donne pas entière satisfaction.

En effet, les données utilisées pour l'entraînement de tels modèles sont souvent tronquées ou partiellement observées, ce qui nuit aux performances des modèles. Une telle situation conduit à l'utilisation de signaux simulés, qui ne sont pas toujours représentatifs des signaux susceptibles d'être réellement observés.

En outre, un tel procédé requiert, lors de la phase d'entraînement, une connaissance initiale exhaustive des émetteurs radar susceptibles d'être rencontrés, et nécessite un réentraînement des modèles à chaque ajout d'un nouvel émetteur radar à la liste des émetteurs connus.

Un but de la présente invention est de remédier à au moins un des inconvénients de l'état de la technique.

Un autre but de l'invention est de proposer un procédé de désentrelacement qui soit efficace et dont la mise en oeuvre ne nécessite pas une connaissance *a priori* des émetteurs radar dont les impulsions radar sont susceptibles de provenir.

### Exposé de l'invention

À cet effet, l'invention concerne un procédé de désentrelacement du type précité, le procédé étant mis en oeuvre par ordinateur et comprenant les étapes :
- mise en oeuvre d'un premier algorithme de partitionnement pour affecter chaque impulsion à une première classe correspondante, sur la base de la fréquence, de la durée et de l'instant d'arrivée associés ;
- pour chaque première classe, estimation, à partir de la fréquence et de la durée de chaque impulsion correspondante, d'une fréquence moyenne et d'une durée d'impulsion moyenne respectives ;
- mise en oeuvre d'un deuxième algorithme de partitionnement pour regrouper les premières classes en deuxièmes classes sur la base de la fréquence moyenne et de la durée moyenne correspondantes ;
- pour chaque deuxième classe, détermination d'une distribution des instants d'arrivée des impulsions associées ;
- mise en oeuvre d'un troisième algorithme de partitionnement pour regrouper les deuxièmes classes en troisièmes classes, sur la base de distances de transport optimal entre les distributions des instants d'arrivée déterminées correspondantes, chaque troisième classe étant associée à un émetteur radar respectif.

En effet, la prise en compte à la fois de la fréquence, de la durée et de l'instant d'arrivée des impulsions, lors de la mise en oeuvre de l'algorithme de partitionnement, autorise une excellente discrimination des signaux provenant d'émetteurs radar qui présentent des caractéristiques proches (en particulier, qui émettent sur des fréquences voisines et/ou avec des durées d'impulsion comparables), notamment en présence de bruit.

Par la mise en oeuvre d'un tel partitionnement, il est évité un effet indésirable selon lequel des impulsions présentant des valeurs proches des caractéristiques usuellement utilisées pour le désentrelacement (fréquence et/ou durée d'impulsion) sont attribuées au mauvais émetteur radar.

Grâce à un tel partitionnement, l'impact du bruit est négligeable sur les performances des deuxième et troisième algorithmes de partitionnement mis en oeuvre ultérieurement, qui fournissent des résultats fiables.

En outre, la mise en oeuvre d'un algorithme agglomératif hiérarchique fondé sur les distances de transport optimal assure que des impulsions arrivant en même temps au niveau du récepteur sont attribuées au même émetteur radar, prenant ainsi en compte un éventuel caractère multifréquence d'un ou de plusieurs émetteurs radar.

De façon avantageuse, le procédé selon l'invention présente une ou plusieurs des caractéristiques suivantes, prises isolément ou selon toute combinaison techniquement possible :
le troisième algorithme de partitionnement est mis en oeuvre uniquement pour les impulsions associées à une deuxième classe présentant une taille supérieure à une taille minimale prédéterminée ;
le procédé comprend, en outre, après la mise en oeuvre du troisième algorithme de partitionnement :
   - pour chaque troisième classe, estimation d'une densité de probabilité d'une loi de probabilité de l'instant d'arrivée des impulsions correspondantes ;
   - pour chaque deuxième classe présentant une taille inférieure à la taille minimale prédéterminée, dite classe non-significative :
      - calcul d'une vraisemblance de chaque loi de probabilité, pour les instants d'arrivée des impulsions correspondantes, à partir de la densité de probabilité estimée ;
      - association de la classe non-significative à la troisième classe correspondant à la loi de probabilité pour laquelle la vraisemblance calculée est maximale ;
pour chaque troisième classe, l'estimation de la densité de probabilité comprend la mise en oeuvre d'une méthode paramétrique, de préférence une méthode par noyau ;
le premier algorithme de partitionnement est un algorithme de partitionnement non supervisé basé sur la densité, de préférence un algorithme de partitionnement hiérarchique de données bruitées basé sur la densité spatiale ;
le deuxième algorithme de partitionnement met en oeuvre un test de Kolmogorov-Smirnov, sur la base de la fréquence ou de la durée d'impulsion, pour valider ou non le regroupement de premières classes distinctes en une même deuxième classe ;
le troisième algorithme de partitionnement met en oeuvre un test, sur la base de distances de transport optimal entre des distributions des instants d'arrivée des impulsions des deuxièmes classes, pour valider ou non le regroupement de deuxièmes classes distinctes en une même troisième classe ;
le deuxième algorithme de partitionnement et/ou le troisième algorithme de partitionnement est un algorithme agglomératif hiérarchique.

Selon un autre aspect de l'invention, il est proposé un programme d'ordinateur comprenant des instructions exécutables qui, lorsqu'elles sont exécutées par ordinateur, mettent en en oeuvre les étapes du procédé tel que défini ci-dessus.

Le programme d'ordinateur peut être en tout langage informatique, tel que par exemple en langage machine, en C, C++, JAVA, Python, etc.

Selon un autre aspect de l'invention, il est proposé un dispositif de désentrelacement d'impulsions radar, chaque impulsion radar étant associée à une fréquence, une durée et un instant d'arrivée respectifs, le dispositif de désentrelacement comprenant une unité de traitement configurée pour :
- mettre en oeuvre un premier algorithme de partitionnement pour affecter chaque impulsion à une première classe correspondante, sur la base de la fréquence, de la durée et de l'instant d'arrivée associés ;
- pour chaque première classe, estimer, à partir de la fréquence et de la durée de chaque impulsion correspondante, une fréquence moyenne et d'une durée d'impulsion moyenne respectives ;
- mettre en oeuvre un deuxième algorithme de partitionnement pour regrouper les premières classes en deuxièmes classes sur la base de la fréquence moyenne et de la durée moyenne correspondantes ;
- pour chaque deuxième classe, déterminer une distribution des instants d'arrivée des impulsions associées ;
- mettre en oeuvre un troisième algorithme de partitionnement pour regrouper les deuxièmes classes en troisièmes classes, sur la base de distances de transport optimal entre les distributions des instants d'arrivée déterminées correspondantes, chaque troisième classe étant associée à un émetteur radar respectif.

Le dispositif selon l'invention peut être tout type d'appareil tel qu'un serveur, un ordinateur, une tablette, un calculateur, un processeur, une puce informatique, programmé pour mettre en oeuvre le procédé selon l'invention, par exemple en exécutant le programme d'ordinateur tel que défini ci-dessus.

### Brève description des figures

L'invention sera mieux comprise à la lecture de la description qui va suivre, donnée uniquement à titre d'exemple non limitatif et faite en se référant aux dessins annexés sur lesquels :
la figure 1 est une représentation schématique d'un dispositif de désentrelacement selon l'invention ;
la figure 2 est un ordinogramme d'un procédé de désentrelacement selon l'invention, mis en oeuvre par le dispositif de la figure 1 ;
la figure 3 est un graphe représentant des impulsions en provenance de trois émetteurs radar, en fonction de leur fréquence et de leur instant (ou temps) d'arrivée ;
la figure 4 est un graphe représentant les impulsions de la figure 3, en fonction de leur durée et de leur instant d'arrivée ;
la figure 5 est un graphe représentant les impulsions de la figure 3, en fonction de leur durée et de leur fréquence ;
la figure 6 est un graphe représentant une partie des impulsions de la figure 3, en fonction de leur fréquence, de leur instant d'arrivée, de leur durée et de leur première classe ;
la figure 7 est un graphe représentant les premières classes de la figure 6 en fonction de leur durée d'impulsion moyenne et de leur fréquence moyenne ;
la figure 8 est un dendrogramme représentatif de la mise en oeuvre d'un deuxième algorithme de partitionnement des premières classes des impulsions de la figure 3 ;
la figure 9 est un graphe représentant les impulsions de la figure 3, en fonction de leur fréquence, de leur instant d'arrivée et de leur deuxième classe ;
les figures 10A, 10B et 10C sont des histogrammes des instants d'arrivée des impulsions de, respectivement, trois deuxièmes classes distinctes des impulsions de la figure 9 ; et
la figure 11 est un graphe représentant les impulsions de la figure 3, en fonction de leur fréquence, de leur instant d'arrivée et de leur troisième classe.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à l'état de la technique antérieure. Cette sélection comprend au moins une caractéristique de préférence fonctionnelle sans détails structurels, ou avec seulement une partie des détails structurels si c'est cette partie qui est uniquement suffisante pour conférer un avantage technique ou pour différencier l'invention par rapport à l'état de la technique antérieure.

En particulier toutes les variantes et tous les modes de réalisation décrits sont combinables entre eux si rien ne s'oppose à cette combinaison sur le plan technique.

Sur les figures et dans la suite de la description, les éléments communs à plusieurs figures conservent la même référence.

### Description détaillée

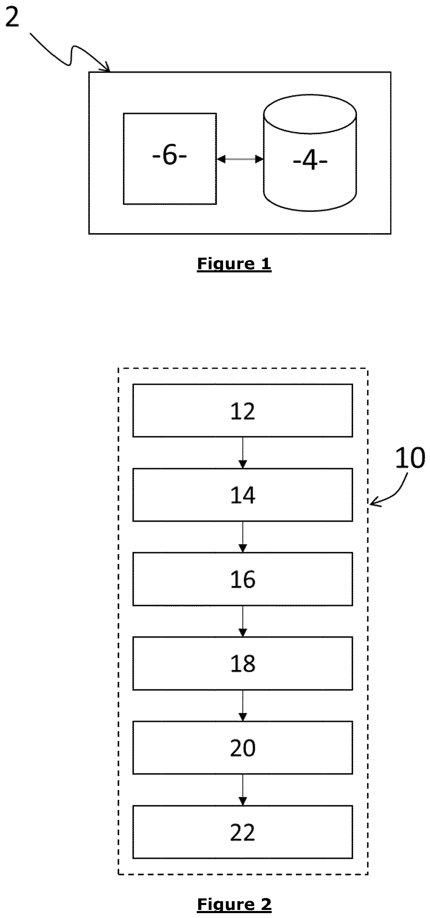

Un dispositif de désentrelacement 2 selon l'invention est illustré par la figure 1.

Le dispositif de désentrelacement 2 est destiné à désentrelacer des impulsions radar reçues par un récepteur, plus spécifiquement dans le cas où lesdites impulsions proviennent d'une pluralité d'émetteurs radar distincts.

Le dispositif de désentrelacement 2 comprend une mémoire 4 et une unité de traitement 6 reliées entre elle.

Le dispositif de désentrelacement 2 est susceptible de se présenter sous une forme matérielle, telle qu'un ordinateur, un serveur, un processeur, une puce électronique, etc. Alternativement, ou de façon additionnelle, le dispositif de désentrelacement 2 est susceptible de se présenter sous une forme logicielle telle qu'un programme d'ordinateur, ou une application, par exemple une application pour un appareil utilisateur de type tablette ou smartphone.

La mémoire 4 est configurée pour stocker, pour chaque impulsion reçue, une fréquence, une durée et un instant d'arrivée respectifs. De préférence, chaque impulsion est associée, dans la mémoire 4, à un identifiant respectif.

En outre, comme cela apparaîtra dans la description qui va suivre, la mémoire 4 est également configurée pour stocker d'autres informations, telles qu'un identifiant d'une première classe, d'une deuxième classe et/ou d'une troisième classe à laquelle chaque impulsion est associée.

Pour chaque impulsion, la fréquence, la durée et l'instant d'arrivée respectifs ont, par exemple, été préalablement obtenues au moyen d'un étage de prétraitement configuré pour déterminer lesdites caractéristiques pour chaque impulsion reçue au niveau du récepteur.

L'unité de traitement 6 est une unité de traitement matérielle, telle qu'un processeur, une puce électronique, un calculateur, un ordinateur, un serveur, etc. Alternativement, ou de façon additionnelle, l'unité de traitement 6 est une unité de traitement logicielle, telle qu'une application, un programme d'ordinateur, une machine virtuelle, etc.

L'unité de traitement 6 est configurée pour mettre en oeuvre un procédé de désentrelacement 10 (figure 2), afin d'assigner chaque impulsion à un émetteur radar correspondant.

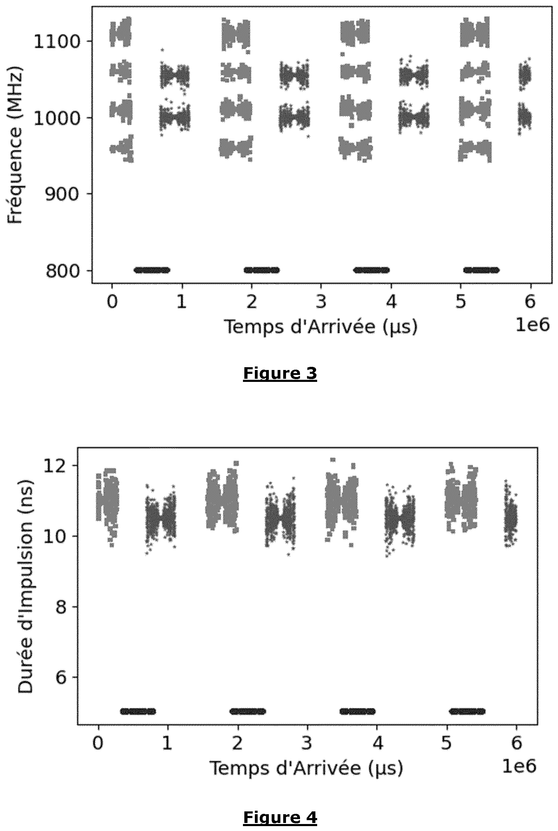

La mise en oeuvre du procédé de désentrelacement selon l'invention va être décrite en référence à l'exemple des figures 3, 4 et 5, dans lequel les impulsions sont reçues en provenance de trois émetteurs radar distincts.

Le premier émetteur radar est configuré pour émettre des impulsions présentant une durée de 11 ns (nanoseconde), à quatre fréquences distinctes : 965 MHz, 1010 MHz, 1060 MHz et 1110 MHz (mégahertz). Sur les figures 3 à 5, les impulsions correspondantes sont chacune représentées par un marqueur carré.

Le deuxième émetteur radar est configuré pour émettre des impulsions présentant une durée de 10,5 ns, à deux fréquences distinctes : 1000 MHz et 1055 MHz. Sur les figures 3 à 5, les impulsions correspondantes sont chacune représentées par un marqueur en forme d'étoile.

En outre, le troisième émetteur radar est configuré pour émettre des impulsions présentant une durée de 5 ns, à une unique fréquence de 800 MHz. Sur les figures 3 à 5, les impulsions correspondantes sont chacune représentées par un marqueur circulaire.

Sur la figure 3, les impulsions sont représentées en fonction de leur fréquence et de leur instant d'arrivée. Il apparaît, sur cette figure, que les impulsions provenant du premier et du deuxième émetteurs radar sont étalées autour des fréquences d'émission théoriques correspondantes. Ceci résulte de la présence de bruit, qui conduit à des erreurs dans la détermination de fréquence réalisée par l'étage de prétraitement.

À l'inverse, dans cet exemple, le signal correspondant aux impulsions provenant du troisième émetteur radar n'est pas bruité, de sorte que la même fréquence est déterminée pour toutes les impulsions correspondantes.

Sur la figure 4, les impulsions sont représentées en fonction de leur durée et de leur instant d'arrivée. Il apparaît, sur cette figure, que les impulsions en provenance du premier et du deuxième émetteurs radar sont également étalées autour des durées théoriques correspondantes. Ceci résulte du bruit mentionné précédemment, qui conduit également à des erreurs dans la détermination de durée d'impulsion réalisée par l'étage de prétraitement.

À l'inverse, dans cet exemple, l'absence de bruit sur le signal associé aux impulsions issues du troisième émetteur radar résulte en une même durée déterminée pour toutes les impulsions correspondantes.

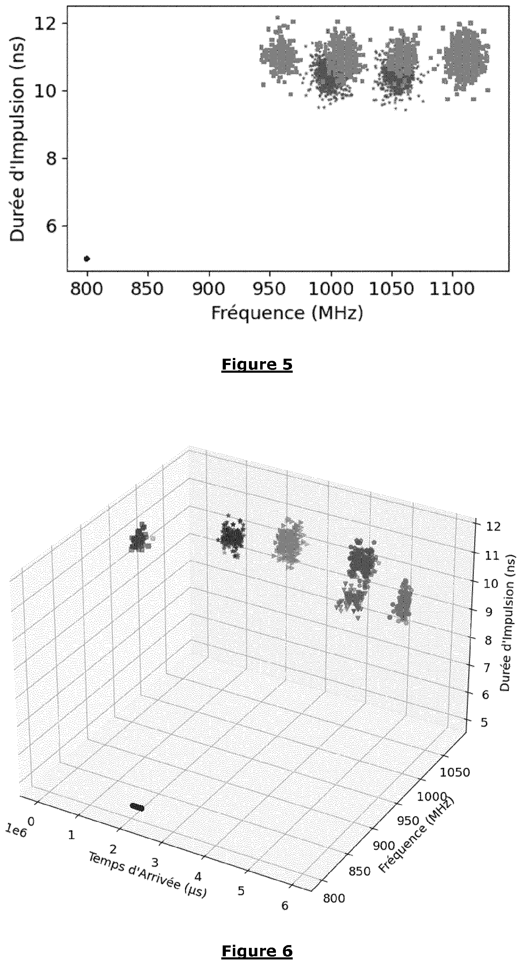

Enfin, sur la figure 5, les impulsions sont représentées en fonction de leur durée et de leur fréquence. Il ressort de ce qui précède que, dans cette représentation, et du fait de la présence de bruit, les impulsions issues du premier et du deuxième émetteurs radar forment des amas qui se superposent.

Comme indiqué précédemment, l'unité de traitement 6 est configurée pour mettre en oeuvre le procédé de désentrelacement 10, afin d'assigner chaque impulsion à un émetteur radar correspondant, et ce même dans le cas de l'exemple des figures 3 à 5.

Pour exécuter ledit procédé de désentrelacement 10, l'unité de traitement 6 est configurée pour mettre en oeuvre les étapes :
- mise en oeuvre 12 d'un premier algorithme de partitionnement ;
- estimation 14 de fréquence et de durée moyenne ;
- mise en oeuvre 16 d'un deuxième algorithme de partitionnement
- détermination de distribution 18 ; et
- mise en oeuvre 20 d'un troisième algorithme de partitionnement.

De préférence, l'unité de traitement 6 est également configurée pour mettre en oeuvre une étape optionnelle 22 de traitement de classes non-significatives.

### Mise en oeuvre du premier algorithme de partitionnement

Plus précisément, l'unité de traitement 6 est configurée pour mettre en oeuvre, au cours de l'étape 12, un premier algorithme de partitionnement pour affecter chaque impulsion à une première classe correspondante, sur la base de la fréquence, de la durée et de l'instant d'arrivée associés.

Ceci est avantageux, dans la mesure où, par la mise en oeuvre d'un partitionnement en trois dimensions, le problème causé par la superposition des impulsions dans le plan des durées et des fréquences, du fait de la présence de bruit, est surmonté. Il en résulte que chaque première classe est associée à un passage d'un émetteur radar, pour une fréquence et une durée d'impulsions théoriques données.

De préférence, l'unité de traitement 6 est également configurée pour écrire, dans la mémoire 4, en correspondance avec chaque impulsion, la première classe associée.

Avantageusement, le premier algorithme de partitionnement est un algorithme de partitionnement non supervisé basé sur la densité. Ceci est avantageux, dans la mesure où un tel algorithme permet de traiter des classes hétérogènes en termes de densité et de répartition de points.

Par exemple, le premier algorithme de partitionnement est l'algorithme HDBSCAN (pour « *Hierarchical Density-Based Spatial Clustering of Applications with Noise* », ou algorithme de partitionnement hiérarchique de données bruitée basé sur la densité spatiale).

Alternativement, le premier algorithme de partitionnement est l'algorithme DBSCAN (pour « *Density-Based Spatial Clustering of Applications with Noise* », ou algorithme de partitionnement de données bruitée basé sur la densité spatiale), ou encore l'algorithme OPTICS (pour « *Ordering Points to Identify The Clustering Structure* », ou ordonnancement de points pour identifier la structure de partitionnement).

Dans le cas de l'exemple décrit précédemment, la mise en oeuvre de l'étape 12 conduit à l'identification de trente-six premières classes distinctes, ainsi qu'à un ensemble d'impulsions considérées comme formant des données aberrantes.

Les résultats de la mise en oeuvre du premier algorithme de partitionnement sur les impulsions de l'exemple sont illustrés par la figure 6. Dans un souci de lisibilité, seules sept premières classes sont représentées, dans l'espace à trois dimensions des fréquences, des instants d'arrivée et des durées d'impulsion. Les impulsions d'une même première classe sont représentées par un même marqueur respectif (cercle foncé, étoile, carré, pentagone, triangle pointant vers le bas, cercle clair, triangle pointant vers la droite).

### Estimation de la fréquence moyenne et de la durée moyenne

L'unité de traitement 6 est également configurée de façon à estimer, au cours de l'étape d'estimation 14, pour chaque première classe, une fréquence moyenne et d'une durée d'impulsion moyenne respectives, et ce à partir de la fréquence et de la durée des impulsions correspondantes.

Par exemple, pour chaque première classe, la fréquence moyenne associée est égale à la moyenne arithmétique des fréquences de l'ensemble des impulsions correspondantes. De façon similaire, pour chaque première classe, la durée d'impulsion moyenne associée est, par exemple, égale à la moyenne arithmétique des durées de l'ensemble des impulsions correspondantes.

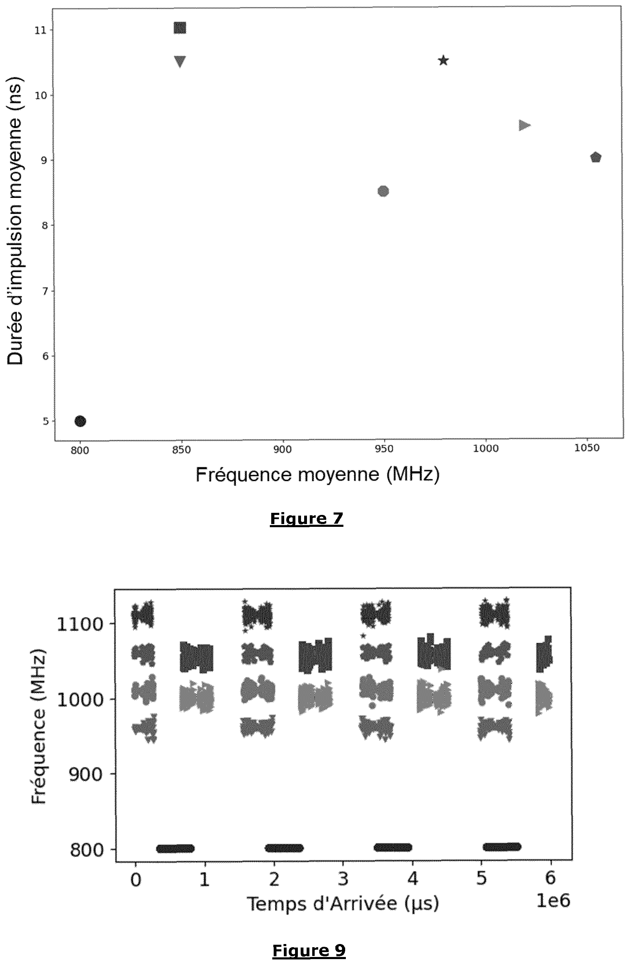

Les résultats de la mise en oeuvre de l'étape 14, pour les premières classes de la figure 6, sont illustrés par la figure 7. Comme cela apparaît sur cette figure, chaque première classe, associée à un marqueur respectif, est associée à une fréquence moyenne (en abscisse) et une durée d'impulsion moyenne (en ordonnée) correspondantes.

### Mise en oeuvre du deuxième algorithme de oartitionnement

L'unité de traitement 6 est également configurée pour mettre en oeuvre, au cours de l'étape 16, un deuxième algorithme de partitionnement pour regrouper les premières classes en deuxièmes classes, sur la base de la fréquence moyenne et de la durée d'impulsion moyenne correspondantes, qui ont été déterminées lors de l'étape d'estimation 14.

Dans ce cas, toutes les impulsions d'une première classe donnée sont associées à une même deuxième classe.

De préférence, l'unité de traitement 6 est également configurée pour écrire, dans la mémoire 4, en correspondance avec chaque impulsion, la deuxième classe associée.

Avantageusement, le deuxième algorithme de partitionnement est un algorithme agglomératif hiérarchique. Un tel algorithme de partitionnement présente l'avantage d'être robuste.

Dans ce cas, l'unité de traitement 6 est configurée pour agréger itérativement les premières classes, sur la base de leur distance dans l'espace des fréquences moyennes et des durées d'impulsion moyennes. Par exemple, une telle distance est la distance euclidienne.

Plus précisément, l'unité de traitement 6 est configurée pour, à chaque itération, calculer la distance entre tous les premiers éléments pris deux à deux, et pour agréger les deux premiers éléments pour lesquels la distance calculée est minimale.

À cette étape, par « premier élément », il est entendu une première classe, ou encore un agrégat de premières classes obtenu à l'issue d'une itération précédente.

En outre, l'unité de traitement 6 est configurée pour calculer un score associé à chaque agrégation. Comme cela sera décrit ultérieurement, l'unité de traitement 6 est également configurée pour regrouper ou non les premières classes en deuxièmes classes sur la base des scores calculés.

De préférence, pour calculer chaque score, l'unité de traitement 6 est configurée pour mettre en oeuvre un test statistique sur la base d'une caractéristique des impulsions. De préférence, ladite caractéristique est la fréquence des impulsions de chaque premier élément. Alternativement, si la variance des durées d'impulsions est inférieure à une valeur prédéterminée (situation représentative d'un signal radar peu bruité), l'unité de traitement 6 est configurée pour mettre en oeuvre le test statistique sur la base de la fréquence et de la durée des impulsions de chaque premier élément. Dans chacun de ces deux cas, le score est, de préférence, la valeur p fournie par le test statistique.

Avantageusement, le test statistique est le test de Kolmogorov-Smirnov. Ceci est avantageux, dans la mesure où un tel test permet de déterminer si deux premiers éléments ont été générés par la même loi de probabilité, résultant en une évaluation fiable de leur similarité.

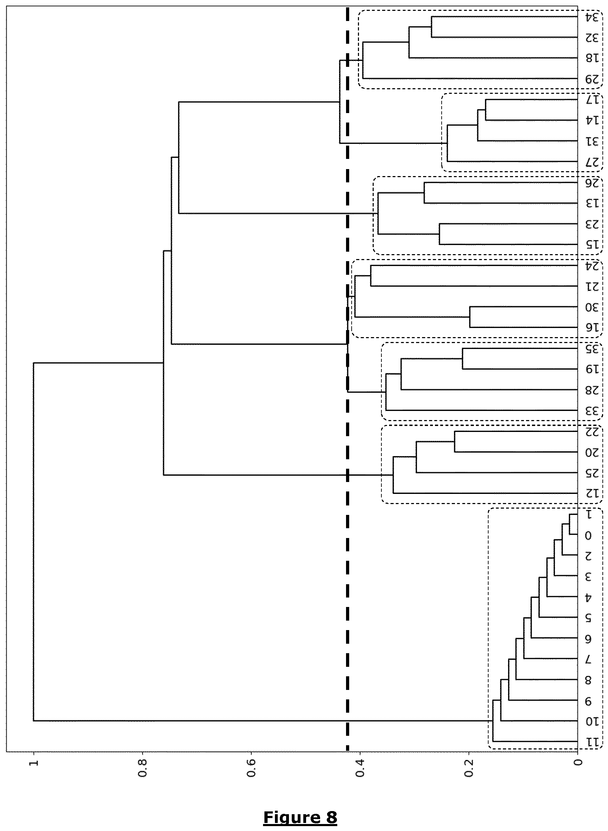

L'unité de traitement 6 est également configurée pour enrichir un dendrogramme représentatif de la mise en oeuvre de l'algorithme agglomératif hiérarchique. Plus précisément encore, l'unité de traitement 6 est configurée pour assigner, à chaque noeud du dendrogramme, représentatif de l'agrégation de deux premiers éléments le résultat du test statistique pour ces deux premiers éléments. Par exemple, sur la figure 8 est représenté le dendrogramme obtenu à l'issue d'une telle agrégation pour les trente-six premières classes obtenues à l'issue de l'étape 12.

L'unité de traitement 6 est également configurée pour regrouper lesdits deux premiers éléments en une même deuxième classe si le score est inférieur à un premier seuil prédéterminé. Par exemple, sur la figure 8, le premier seuil prédéterminé est illustré par une ligne discontinue d'ordonnée 0,42.

L'unité de traitement 6 est également configurée de façon à considérer la branche suivante, si le score est inférieur au premier seuil prédéterminé, ou si le sommet du dendrogramme est atteint.

De préférence, le premier seuil est une fonction des valeurs prises par le score pour l'ensemble des premiers éléments. Par exemple, chaque valeur du test statistique est associée à un rapport obtenu en divisant ladite valeur par la valeur du test statistique immédiatement inférieure. Puis, le premier seuil est choisi strictement compris entre la valeur du test statistique associé au plus grand rapport et la valeur du test statistique immédiatement inférieure.

Le résultat de l'application du deuxième algorithme de partitionnement aux premières classes de l'exemple est illustré par la figure 9. Comme cela apparaît sur la figure, les trente-six premières classes ont été regroupées en sept deuxièmes classes, chacune associée à un marqueur respectif.

### Détermination de distribution

L'unité de traitement 6 est également configurée pour déterminer, au cours de l'étape de détermination 18, une distribution des instants d'arrivée pour chaque deuxième classe. En d'autres termes, pour chaque deuxième classe, l'unité de traitement 6 est configurée pour déterminer un histogramme des instants d'arrivée des impulsions associées.

### Mise en oeuvre du troisième algorithme de oartitionnement

L'unité de traitement 6 est également configurée pour mettre en oeuvre, au cours de l'étape 20, un troisième algorithme de partitionnement pour regrouper les deuxièmes classes en troisièmes classes, sur la base de distances de transport optimal entre les distributions des instants d'arrivée déterminées lors de l'étape de détermination 18.

Dans ce cas, toutes les impulsions d'une deuxième classe donnée sont associées à une même troisième classe.

Au sens de la présente invention, chaque troisième classe est considérée comme représentant un émetteur radar respectif.

De préférence, l'unité de traitement 6 est également configurée pour écrire, dans la mémoire 4, en correspondance avec chaque impulsion, la troisième classe associée.

De préférence, le troisième algorithme de partitionnement est un algorithme agglomératif hiérarchique.

Dans ce cas, l'unité de traitement 6 est configurée pour agréger itérativement les deuxièmes classes, sur la base de la distance de transport optimal entre les distributions des instants d'arrivée correspondantes, simplement appelée « distance de transport optimal » par la suite.

Plus précisément, l'unité de traitement 6 est configurée pour, à chaque itération, calculer la distance de transport optimal entre tous les deuxièmes éléments pris deux à deux, et pour agréger les deux deuxièmes éléments pour lesquels la distance de transport optimal calculée est minimale.

Par « distance de transport optimal », il est entendu, au sens de la présente invention, une valeur représentative du coût pour transformer une distribution en une autre, c'est-à-dire pour déplacer les points d'une distribution vers une autre.

À cette étape, par « deuxième élément », il est entendu une deuxième classe, ou encore un agrégat de deuxièmes classes obtenu à l'issue d'une itération précédente.

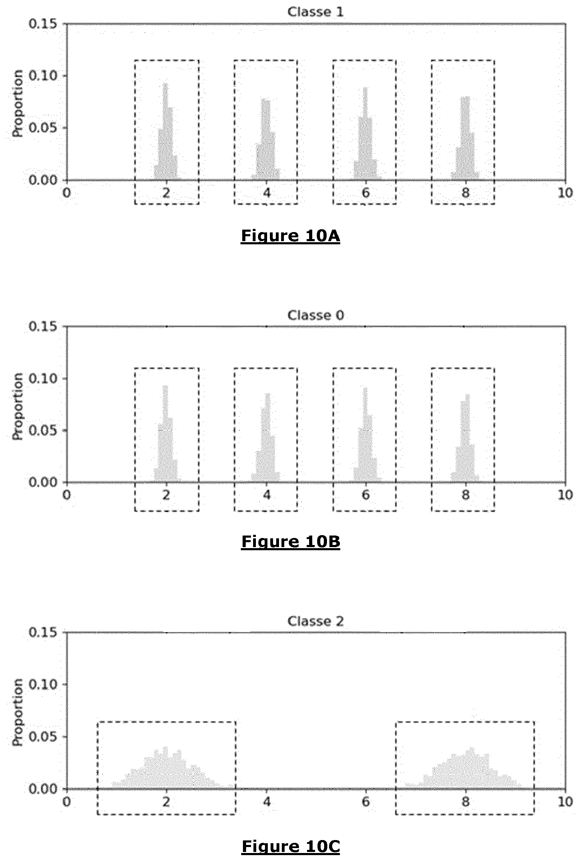

Par exemple, il apparaît que les distributions des figures 10A et 10B sont très similaires. Notamment, les impulsions de la deuxième classe associée à la figure 10A et les impulsions de la deuxième classe associée à la figure 10B arrivent en même temps au niveau du récepteur, ce qui traduit que les impulsions de ces deux deuxièmes classes proviennent vraisemblablement du même émetteur radar. La distance de transport optimal entre les deux deuxièmes classes est donc faible. À l'inverse, il apparaît que les distributions des figures 10B et 10C sont peu similaires, et le coût pour transformer une distribution en une autre est plus élevé que précédemment. Par conséquent, l'unité de traitement 6 agrège d'abord les deuxièmes classes associées aux figures 10A et 10B.

L'unité de traitement 6 est également configurée pour enrichir un dendrogramme représentatif de la mise en oeuvre de l'algorithme agglomératif hiérarchique.

L'unité de traitement 6 est, en outre, configurée pour regrouper en une même troisième classe, les deuxièmes éléments pour lesquels la distance de transport optimal est inférieure à un deuxième seuil prédéterminé. Par exemple, chaque distance de transport optimal est associée à un rapport obtenu en divisant ladite distance de transport optimal par la distance de transport optimal immédiatement inférieure. Puis, le deuxième seuil est choisi strictement compris entre la distance de transport optimal associée au plus grand rapport et la distance de transport optimal immédiatement inférieure

### Traitement de classes non-significatives

Avantageusement, le troisième algorithme de partitionnement est mis en oeuvre uniquement pour les impulsions associées à une deuxième classe présentant une taille supérieure à une taille minimale prédéterminée.

Par « taille d'une classe », il est entendu, au sens de la présente invention, le nombre d'impulsions qui lui sont associées.

Ceci est avantageux, dans la mesure où, pour être significative, et donc pour assurer un regroupement fiable, la distance de transport optimal requiert d'être calculée sur un nombre suffisant d'impulsions, de l'ordre de cent impulsions.

Chaque deuxième classe présentant une taille inférieure à la taille minimale prédéterminée est dite « classe non-significative ».

Dans ce cas, l'unité de traitement 6 est configurée de façon à estimer, au cours d'une étape 22 ultérieure à la mise en oeuvre 20 du troisième algorithme de partitionnement, une densité de probabilité d'une loi de probabilité de l'instant d'arrivée des impulsions correspondant à chaque troisième classe.

En outre, l'unité de traitement 6 est configurée de façon à, pour chaque classe non-significative :
- calculer une vraisemblance de chaque loi de probabilité, pour les instants d'arrivée des impulsions correspondant à ladite classe non-significative, à partir de la densité de probabilité estimée ; et
- associer la classe non-significative à la troisième classe correspondant à la loi de probabilité pour laquelle la vraisemblance calculée est maximale.

De préférence, pour estimer la densité de probabilité, l'unité de traitement 6 est configurée pour mettre en oeuvre une méthode non paramétrique, par exemple une méthode par noyau. Ceci est avantageux, dans la mesure où une méthode non paramétrique autorise une estimation de la densité de probabilité sans connaissance *a priori* de tous les paramètres décrivant la structure des données.

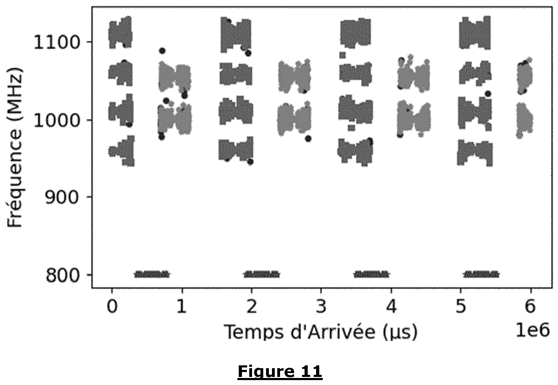

Le résultat de la mise en oeuvre des étapes 20 et 22 aux deuxièmes classes de l'exemple est illustré par la figure 11, sur laquelle il apparaît que chaque impulsion (en dehors des données aberrantes issues de l'étape 12) est associée à une troisième classe respective, donc à un émetteur radar respectif.

La mise en oeuvre du troisième algorithme de partitionnement uniquement pour les impulsions associées à une deuxième classe de taille supérieure à la taille minimale est une caractéristique avantageuse, dans la mesure où, pour assurer un regroupement fiable, la distance de transport optimal requiert d'être calculée sur un nombre suffisant d'impulsions, de l'ordre de cent impulsions.

Le traitement des classes non-significatives sur la base du maximum de vraisemblance est avantageux, dans la mesure où un tel traitement permet d'assigner lesdites classes non-significatives à une troisième classe, bien que leur taille ne permette pas de recourir à une approche purement statistique.

Le recours à une méthode paramétrique pour l'estimation de la densité de probabilité de chaque troisième classe est avantageux, dans la mesure où une méthode non paramétrique autorise une estimation de la densité de probabilité sans connaissance *a priori* de tous les paramètres décrivant la structure des données.

Le recours à un algorithme de partitionnement non supervisé basé sur la densité, en guise de premier algorithme de partitionnement, est avantageux, dans la mesure où un tel algorithme autorise un traitement de classes hétérogènes en termes de densité et de répartition de points.

Le recours au test de Kolmogorov-Smirnov est avantageux, dans la mesure où un tel test permet de déterminer si deux premiers éléments ont été générés par la même loi de probabilité, résultant en une évaluation fiable de leur similarité.

Le recours aux distances de transport optimal est avantageux, dans la mesure où il autorise la prise en compte d'un éventuel caractère multifréquence d'un ou de plusieurs émetteurs radar.

Le recours à un algorithme agglomératif hiérarchique pour le deuxième algorithme de partitionnement et/ou le troisième algorithme de partitionnement est avantageux, un tel algorithme de partitionnement étant robuste.

Bien entendu l'invention n'est pas limitée aux exemples qui viennent d'être décrits.

### Fonctionnement

Le fonctionnement du dispositif de désentrelacement 2 va maintenant être décrit.

Le dispositif de désentrelacement 2 reçoit des impulsions radar, chacune associée à une fréquence, une durée et un instant d'arrivée respectifs.

Puis, au cours d'une étape 12, l'unité de traitement 6 du dispositif de désentrelacement 2 met en oeuvre le premier algorithme de partitionnement pour affecter chaque impulsion à une première classe correspondante, sur la base de la fréquence, de la durée et de l'instant d'arrivée associés.

De préférence, pour chaque impulsion, l'unité de traitement 6 écrit, dans la mémoire 4, la première classe correspondante.

Puis, au cours d'une étape d'estimation 14, l'unité de traitement 6 estime, pour chaque première classe, une fréquence moyenne et une durée d'impulsion moyenne respectives, à partir de la fréquence et de la durée des impulsions correspondantes.

Puis, au cours d'une étape 16, l'unité de traitement 6 met en oeuvre un deuxième algorithme de partitionnement pour regrouper les premières classes en deuxièmes classes, sur la base de la fréquence moyenne et de la durée d'impulsion moyenne correspondantes, déterminées lors de l'étape d'estimation 14.

De préférence, pour chaque impulsion, l'unité de traitement 6 écrit, dans la mémoire 4, la deuxième classe correspondante.

Puis, au cours d'une étape de détermination 18, l'unité de traitement 6 détermine, pour chaque deuxième classe, une distribution des instants d'arrivée des impulsions correspondantes.

Puis, au cours d'une étape 20, l'unité de traitement 6 met en oeuvre un troisième algorithme de partitionnement pour regrouper les deuxièmes classes en troisième classes, sur la base de distances de transport optimal entre les distributions des instants d'arrivée déterminées lors de l'étape de détermination 18.

Avantageusement, l'unité de traitement 6 met en oeuvre le troisième algorithme de partitionnement uniquement pour les deuxièmes classes présentant une taille supérieure à la taille minimale prédéterminée.

Dans ce cas, après l'étape 20, et pour chaque troisième classe, l'unité de traitement 6 estime, au cours de l'étape 22, une densité de probabilité d'une loi de probabilité de l'instant d'arrivée des impulsions correspondantes.

En outre, pour chaque classe non-significative, l'unité de traitement 6 calcule une vraisemblance de chaque loi de probabilité, pour les instants d'arrivée des impulsions correspondant à ladite classe non-significative, à partir de la densité de probabilité estimée. Puis l'unité de traitement 6 associe chaque classe non-significative à la troisième classe associée à la loi de probabilité pour laquelle la vraisemblance calculée est maximale.

## Revendications

1. Procédé (10) de désentrelacement d'impulsions radar, chaque impulsion radar étant associée à une fréquence, une durée et un instant d'arrivée respectifs, le procédé (10) étant mis en oeuvre par ordinateur et comprenant les étapes :
- mise en oeuvre (12) d'un premier algorithme de partitionnement pour affecter chaque impulsion à une première classe correspondante, sur la base de la fréquence, de la durée et de l'instant d'arrivée associés ;
- pour chaque première classe, estimation (14), à partir de la fréquence et de la durée de chaque impulsion correspondante, d'une fréquence moyenne et d'une durée d'impulsion moyenne respectives ;
- mise en oeuvre (16) d'un deuxième algorithme de partitionnement pour regrouper les premières classes en deuxièmes classes sur la base de la fréquence moyenne et de la durée moyenne correspondantes ;
- pour chaque deuxième classe, détermination (18) d'une distribution des instants d'arrivée des impulsions associées ;
- mise en oeuvre (20) d'un troisième algorithme de partitionnement pour regrouper les deuxièmes classes en troisièmes classes, sur la base de distances de transport optimal entre les distributions des instants d'arrivée déterminées correspondantes, chaque troisième classe étant associée à un émetteur radar respectif.

2. Procédé selon la revendication 1, dans lequel le troisième algorithme de partitionnement est mis en oeuvre uniquement pour les impulsions associées à une deuxième classe présentant une taille supérieure à une taille minimale prédéterminée.

3. Procédé selon la revendication 2, comprenant, en outre, après la mise en oeuvre (20) du troisième algorithme de partitionnement :
- pour chaque troisième classe, estimation (22) d'une densité de probabilité d'une loi de probabilité de l'instant d'arrivée des impulsions correspondantes ;
- pour chaque deuxième classe présentant une taille inférieure à la taille minimale prédéterminée, dite classe non-significative :
• calcul d'une vraisemblance de chaque loi de probabilité, pour les instants d'arrivée des impulsions correspondantes, à partir de la densité de probabilité estimée ;
• association de la classe non-significative à la troisième classe correspondant à la loi de probabilité pour laquelle la vraisemblance calculée est maximale.

4. Procédé selon la revendication 3, dans lequel, pour chaque troisième classe, l'estimation (22) de la densité de probabilité comprend la mise en oeuvre d'une méthode paramétrique, de préférence une méthode par noyau.

5. Procédé selon l'une quelconque des revendications 1 à 4, dans lequel le premier algorithme de partitionnement est un algorithme de partitionnement non supervisé basé sur la densité, de préférence un algorithme de partitionnement hiérarchique de données bruitées basé sur la densité spatiale.

6. Procédé selon l'une quelconque des revendications 1 à 5, dans lequel le deuxième algorithme de partitionnement met en oeuvre un test de Kolmogorov-Smirnov, sur la base de la fréquence ou de la durée d'impulsion, pour valider ou non le regroupement de premières classes distinctes en une même deuxième classe.

7. Procédé selon l'une quelconque des revendications 1 à 6, dans lequel le troisième algorithme de partitionnement met en oeuvre un test, sur la base de distances de transport optimal entre des distributions des instants d'arrivée des impulsions des deuxièmes classes, pour valider ou non le regroupement de deuxièmes classes distinctes en une même troisième classe.

8. Procédé selon l'une quelconque des revendications 1 à 7, dans lequel le deuxième algorithme de partitionnement et/ou le troisième algorithme de partitionnement est un algorithme agglomératif hiérarchique.

9. Programme d'ordinateur comprenant des instructions exécutables qui, lorsqu'elles sont exécutées par ordinateur, mettent en oeuvre les étapes du procédé selon l'une quelconque des revendications 1 à 8.

10. Dispositif (2) de désentrelacement d'impulsions radar, chaque impulsion radar étant associée à une fréquence, une durée et un instant d'arrivée respectifs, le dispositif de désentrelacement comprenant une unité de traitement (6) configurée pour :
- mettre en oeuvre (12) un premier algorithme de partitionnement pour affecter chaque impulsion à une première classe correspondante, sur la base de la fréquence, de la durée et de l'instant d'arrivée associés ;
- pour chaque première classe, estimer (14), à partir de la fréquence et de la durée de chaque impulsion correspondante, une fréquence moyenne et d'une durée d'impulsion moyenne respectives ;
- mettre en oeuvre (16) un deuxième algorithme de partitionnement pour regrouper les premières classes en deuxièmes classes sur la base de la fréquence moyenne et de la durée moyenne correspondantes ;
- pour chaque deuxième classe, déterminer (18) une distribution des instants d'arrivée des impulsions associées ;
- mettre en oeuvre (20) un troisième algorithme de partitionnement pour regrouper les deuxièmes classes en troisièmes classes, sur la base de distances de transport optimal entre les distributions des instants d'arrivée déterminées correspondantes, chaque troisième classe étant associée à un émetteur radar respectif.
